# EUROPEAN PATENT APPLICATION

(11) **EP 2 330 369 A1**
(43) Date of publication of application: **08.06.2011**
(21) Application number: 10193504.7
(22) Date of filing: 02.12.2010
(51) Int. Cl.: F26B 15/12, F26B 23/00

(54) **Heat exchange and waste heat recovery**

(30) Priority: 07.12.2009 JP 2009277835; 07.12.2009 JP 2009277852
(71) Applicant: Honda Motor Co., Ltd., Tokyo 107-8556 (JP)
(72) Inventor: Sato, Wataru, Tochigi (JP)
(74) Representative: Beder, Jens

(57) **Abstract**

A method for heat exchange between inbound vehicles (12A) and outbound vehicles (12B) moving through a drying furnace (11). Conveying tracks (13, 16), one for the inbound vehicles (12A) conveyed into the drying furnace (11) and another for the outbound vehicles (12B) conveyed out from the drying furnace (11), are provided in a single closed cross-section conduit (17). The closed cross-section conduit (17) is divided in the conveying direction into a plurality of areas (31, 32, 33, 34). Heat exchange takes place between the outbound vehicles (12B) and inbound vehicles (12A) in each of these divided areas (31 to 34) via the atmospheric air in the areas (31 to 34).

## Description

The present invention relates to improvements in a heat exchange method, a heat exchange apparatus, and a waste heat recovery method and apparatus.

Among conventional heat exchange methods and heat exchange apparatuses, there are those in which a coated object is preheated before the coated object is dried inside a drying furnace, as is disclosed in Japanese Patent Application Laid-Open Publication No. H08-150365 (JP H08-150365 A), for example.

According to JP H08-150365 A, insulation chambers are provided around the periphery of the drying furnace, high-temperature air in the insulation chambers is blown onto the coated object by preheating blowers in the entry hatch of the drying furnace, preheating the coated object, and the coated object is then conveyed into the drying furnace.

If the high-temperature air does not reach all parts the coated object uniformly when the high-temperature air is blown onto the coated object, the temperature of the entire coated object will not be uniform and the coated object will not be preheated efficiently. Furthermore, since outside air (fresh air) is led into the insulation chambers by insulation chamber air intake fans, the air in the insulation chambers cools, the temperature decreases greatly, and the coated object is not sufficiently preheated. Therefore, it is difficult to recover waste heat efficiently.

It is therefore an object of the present invention to provide a heat exchange method and heat exchange apparatus whereby preparatory heating can be performed efficiently and sufficiently, and a waste heat recovery method and waste heat recovery apparatus whereby waste heat can be recovered efficiently.

According to an aspect of the present invention, there is provided a heat exchange method comprising the steps of: providing first and second conveying tracks in a single closed cross-section conduit, the first conveying track being used for an inbound object conveyed into a drying furnace and the second conveying track being used for an outbound object conveyed out from the drying furnace; dividing the closed cross-section conduit in a conveying direction into a plurality of areas; and conducting heat exchange between the outbound object and the inbound object in each of the divided areas via atmospheric air in the areas.

Preferably, the heat exchange is conducted by a movement of heat from the outbound object to the inbound object via the atmospheric air in the areas.

In these areas which are smaller divisions of the closed cross-section conduit, heat is transferred from the outbound objects to the inbound objects via the atmospheric air, heat exchange is conducted, and as a result, the temperature of the outbound objects falls, and the temperature of the inbound objects rises.

The drying furnace has a high temperature, and the temperature of the outbound objects conveyed out from the drying furnace decreases as the outbound objects move away from the drying furnace, but the temperature of the inbound objects and the atmospheric air of the areas is increased incrementally by the heat transferred from the outbound objects as the inbound objects move closer to the drying furnace.

By dividing a closed cross-section space into a plurality of areas, the capacities of the areas can be reduced, and the atmospheric air temperatures in the areas can quickly be made uniform. Furthermore, the temperature of the atmospheric air in each of the divided areas can be increased incrementally toward the drying furnace. Therefore, due to these factors, preparatory heating of the inbound objects can be performed efficiently and sufficiently.

According to another aspect of the present invention, there is provided a heat exchange apparatus comprising: a closed cross-section conduit having first and second conveying tracks, the first conveying track being used for an inbound object conveyed into a drying furnace and the second conveying track being used for an outbound object conveyed out from the drying furnace; partitioning structures for dividing the closed cross-section conduit in the conveying direction into a plurality of areas; and an atmospheric air circulation device for circulating atmospheric air in order to facilitate heat exchange between the outbound object and the inbound object in each of the divided areas via the atmospheric air in the areas.

The closed cross-section conduit is provided without a conveying track for conveying outbound objects out from the drying furnace, and a conveying track for conveying inbound objects into the drying furnace. The closed cross-section conduit is partitioned into each of the areas by the partitioning structures. The areas comprise an atmospheric air circulation device for circulating atmospheric air, and heat exchange is facilitated between the outbound objects and the inbound objects via the atmospheric air by this atmospheric air circulation device.

By dividing the closed cross-section conduit into a plurality of areas by the partitioning structures, the capacities of the areas can be reduced, and in addition to this, the atmospheric air temperatures in the areas can be quickly made uniform by the atmospheric air circulation device as well. Furthermore, the temperature of the atmospheric air in each of the divided areas can be increased incrementally toward the drying furnace. Therefore, due to these factors, preparatory heating of the inbound objects can be performed efficiently and sufficiently.

According to another aspect of the present invention, there is provided a waste heat recovery method comprising the steps of: dividing a closed cross-section conduit for conveying an outbound object out from a drying furnace in a conveying direction, into a plurality of areas; conducting heat exchange between the outbound object in the plurality of areas and the atmospheric air in the areas; sending the atmospheric air having undergone heat exchange in a predetermined area to an area that is closer to the drying furnace than the predetermined area; and recovering waste heat in the area that is adjacent to the drying furnace.

In the areas, heat exchange is conducted between the outbound objects and the atmospheric air. The atmospheric air of the areas having undergone heat exchange is sent sequentially toward the drying furnace, and waste heat is recovered in the area that is adjacent to the drying furnace.

The atmospheric air in each of the divided areas undergoes heat exchange with the outbound objects, and the atmospheric air is sent sequentially to areas closer to the drying furnace, whereby the atmospheric air temperature is raised incrementally toward the drying furnace, and waste heat can be efficiently recovered from the highest temperature atmospheric air in the area that is adjacent to the drying furnace.

According to still another aspect of the present invention, there is provided a waste heat recovery apparatus comprising: a closed cross-section conduit for conveying an outbound vehicle out from a drying furnace; partitioning structures for dividing the closed cross-section conduit in a conveying direction, into a plurality of areas; an atmospheric air circulation device for facilitating heat exchange between the areas and the outbound object in each of the areas; an air-blowing device for delivering the atmospheric air having undergone heat exchange with the outbound object in the predetermined area to an area closer to the drying furnace than the predetermined area; and an intake device for drawing in the atmospheric air in the area that is adjacent to the drying furnace in order to recover waste heat.

In each of the adjacent areas divided from each other by the partitioning structures, the atmospheric air is circulated by the atmospheric air circulation device and heat exchange is facilitated between the outbound object and the atmospheric air. The atmospheric air of the areas having undergone heat exchange is sent by the air-blowing device sequentially toward the drying furnace, the atmospheric air in the area adjacent to the drying furnace is drawn in by the intake device, and waste heat is recovered.

The atmospheric air in each of the divided areas is circulated by the atmospheric air circulation device, heat exchange with the outbound objects is facilitated, and the atmospheric air is sent by the air-blowing device sequentially to areas closer to the drying furnace, whereby the atmospheric air temperature is raised incrementally, and waste heat can be recovered efficiently by drawing in the highest temperature atmospheric air in the area adjacent to the drying furnace by the intake device.

Certain preferred embodiments of the present invention will be described in detail below, by way of example only, with reference to the accompanying drawings, in which:
FIG. 1A is a schematic view illustrating a coating and drying equipment according to a first embodiment of the present invention, whilst FIG. 1B is a cross-sectional view taken along line 1B-1B of FIG. 1A;
FIG. 2 is an enlarged cross-sectional view taken along line 2-2 of FIG. 1A;
FIG. 3 is an enlarged cross-sectional view taken along line 3-3 of FIG. 1A;
FIG. 4 is a cross-sectional view showing the state of heat exchange from the outbound vehicles to the inbound vehicles in the second area shown in FIG. 2;
FIG. 5 is a drawing showing the temperature state of the drying furnace, the first through fourth areas, and the external conduit;
FIG. 6A is a schematic view showing a waste heat recovery equipment according to a second embodiment, whilst FIG. 6B is a cross-sectional view taken along line 6B-6B of FIG. 6A;
FIG. 7 is an enlarged cross-sectional view taken along line 7-7 of FIG. 6A;
FIG. 8 is an enlarged cross-sectional view taken along line 8-8 of FIG. 6A;
FIG. 9 is a cross-sectional view showing the state of heat exchange with the outbound vehicles in the second area shown in FIG. 7, and;
FIG. 10 is a schematic view showing a temperature state of the drying furnace, the first through fourth areas, and the external conduit.

### (First Embodiment)

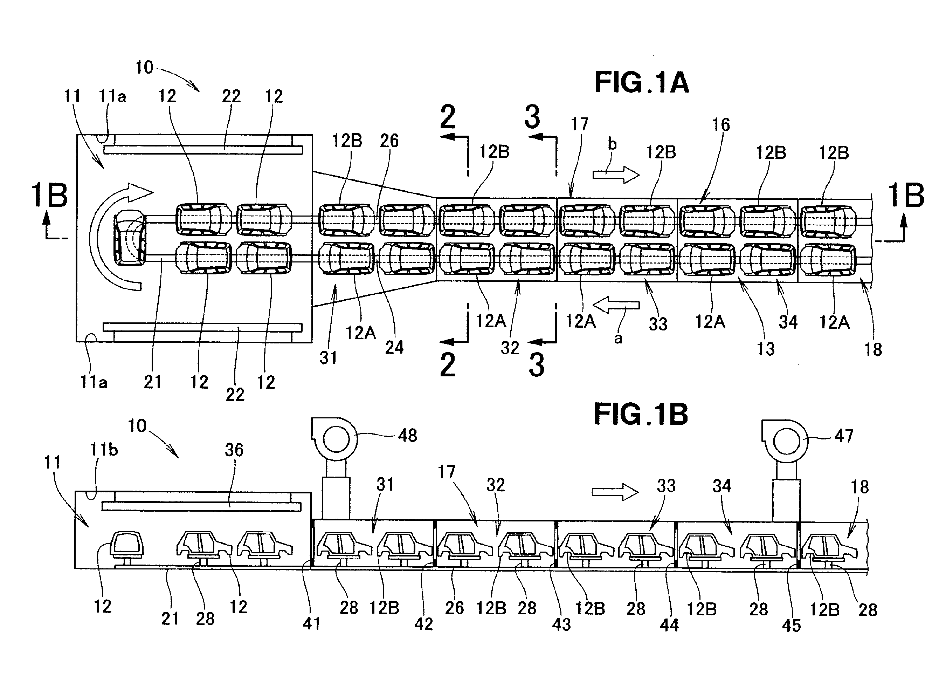

Reference is now made to FIG. 1A showing coating and drying equipment (a heat exchange apparatus) 10.

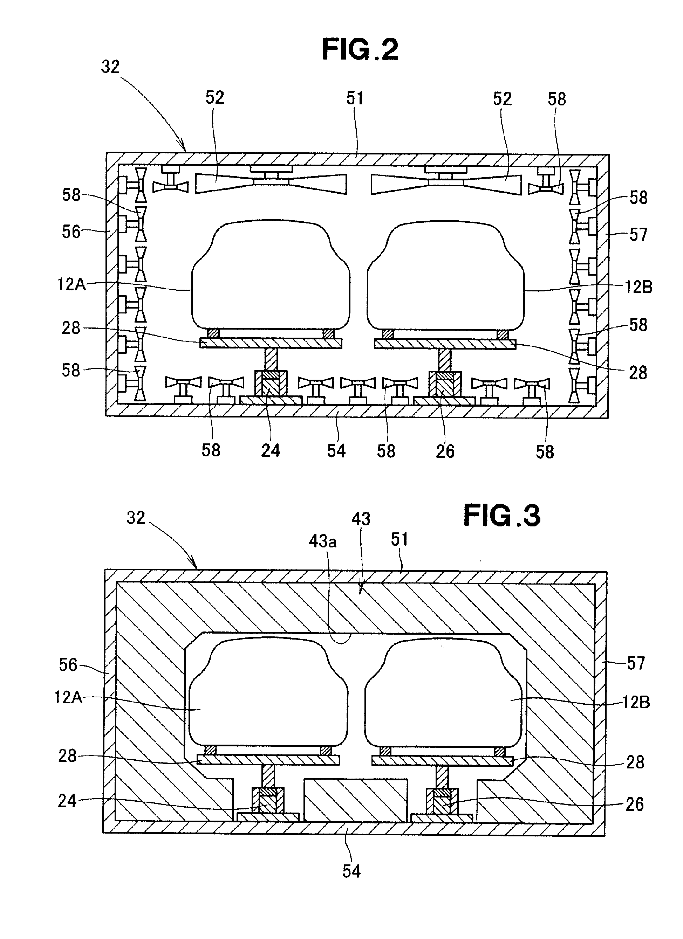

The coating and drying equipment 10 is configured from a drying furnace 11 whose atmospheric air is set to a predetermined temperature, and a closed cross-section conduit 17, in order to dry coating applied to automobiles. The closed cross-section conduit 17 is composed of an inbound track 13 for conveying vehicle bodies 12, i.e. inbound vehicles 12A (the inbound vehicles 12A are the same as the vehicle bodies 12 but their symbols are changed here for the sake of convenience) into the drying furnace 11, and an outbound track 16 for conveying vehicle bodies 12, i.e. outbound vehicles 12B (the outbound vehicles 12B are the same as the vehicle bodies 12 but their symbols are changed here for the sake of convenience) out from the drying furnace 11. The inbound vehicles 12A and the outbound vehicles 12B move at a predetermined speed in the directions shown by the arrows a and b, respectively. An external conduit 18 is set up on the outside of the closed cross-section conduit 17. The closed-cross section in the closed cross-section conduit 17 is the cross section orthogonal to the direction in which the vehicle bodies 12 and the outbound vehicles 12B are conveyed (see FIG. 2).

The drying furnace 11 is formed into a closed space comprising a U-shaped rail 21 for conveying the vehicle bodies 12, and heaters 22, 22 provided to side walls 11a, 11a in order to increase the atmospheric air to a predetermined temperature.

The closed cross-section conduit 17 comprises an inbound rail 24 provided to the inbound track 13 so as to be continuous with the U-shaped rail 21 in order to convey in the inbound vehicles 12A, and an outbound rail 26 provided to the outbound track 16 so as to be continuous with the U-shaped rail 21 in order to convey out the outbound vehicles 12B. The closed cross-section conduit 17 is divided into a plurality of areas in the direction in which the inbound vehicles 12A and the outbound vehicles 12B are conveyed, i.e., a first area 31, a second area 32, a third area 33, and a fourth area 34 in this order from the drying furnace 11.

The drying furnace 11 has a heater 36 for increasing the atmospheric air in the furnace to a predetermined temperature provided to a ceiling 11b, as shown in FIG. 1B.

The vehicle bodies 12, the inbound vehicles 12A, and the outbound vehicles 12B ride on platforms 28 having a T shape as seen from the side and moveably mounted on the U-shaped rail 21, the inbound rail 24, and the outbound rail 26. The platforms 28 are driven in the conveying direction by a drive apparatus (not shown).

The drying furnace 11, the first area 31, second area 32, third area 33, and fourth area 34 of the closed cross-section conduit 17, and the external conduit 18 are partitioned by partitioning walls 41 to 45, respectively.

An outside air intake fan 47 for taking outside air into the fourth area 34 is provided at the top of the closed cross-section conduit 17; specifically, at the top of the fourth area 34, and at the top of the first area 31 is provided a high-temperature air recovery fan 48 for recovering air that has reached a high temperature in the first area 31. The outside air taken into the fourth area 34 by the outside air intake fan 47 is sent from the fourth area 34 to the first area 31 and is recovered by the high-temperature air recovery fan 48.

The second area 32 comprises a plurality of in-chamber circulation fans 52 provided on a ceiling 51 in order to circulate the inside air to make the atmospheric air temperature in the chamber uniform and maintain a constant temperature, and a plurality of air-blowing fans 58 provided on the ceiling 51, the floor 54, and the side walls 56, 57 in order to increase the flow rate of air along the surfaces of the inbound vehicles 12A and the outbound vehicles 12B by blowing air toward the inbound vehicles 12A and the outbound vehicles 12B, as shown in FIG. 2.

Pluralities of in-chamber circulation fans 52 and pluralities of air-blowing fans 58 are provided to the first area 31, the third area 33, and the fourth area 34 shown in FIGS. 1A and 1B as well, similar to the second area 32 shown in FIG. 2.

A partitioning wall 43 attached to the ceiling 51, the floor 54, and the side walls 56, 57 has a window part 43a formed so as to avoid interfering with the inbound vehicles 12A, the outbound vehicles 12B, the platforms 28, 28, the inbound rail 24, and the outbound rail 26, and also to further reduce the size of the gaps formed with these components, as shown in FIG. 3. This wall also suppresses heat exchange between the atmospheric air of the adjacent second area 32 and third area 33 (FIG. 1B).

The other partitioning walls 41, 42, 44, and 45 shown in FIGS. 1A and 1B have the same structure as the partitioning wall 43 described above.

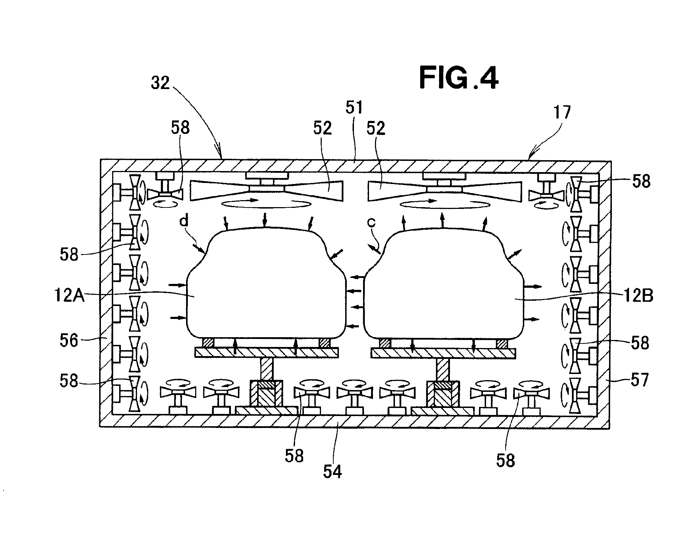

The heat from the outbound vehicles 12B conveyed out from the high-temperature drying furnace 11 (FIGS. 1A and 1B) as shown in FIG. 4 is radiated into the chamber of the second area 32, as shown by the arrows c. The inbound vehicles 12A which are conveyed in from outside and which are at or near room temperature are warmed by the heat radiation from the outbound vehicles 12B, as shown by the arrows d. In other words, heat exchange takes place between the outbound vehicles 12B and the inbound vehicles 12A via the air.

When the in-chamber circulation fans 52 are operated, the air in the second area 32 circulates, the low-temperature air that has accumulated near the floor 54 mixes with the high-temperature air that has accumulated near the ceiling 51, and the temperature distribution of the air in the second area 32 becomes uniform.

When the air-blowing fans 58 are operated, air is blown toward the inbound vehicles 12A and the outbound vehicles 12B, the flow rate of the air flowing along the surfaces of the inbound vehicles 12A and the outbound vehicles 12B increases, the thermal conductivities of the inbound vehicles 12A and the outbound vehicles 12B improve, and the cooling rate of the outbound vehicles 12B and the heating rate of the inbound vehicles 12A can be increased.

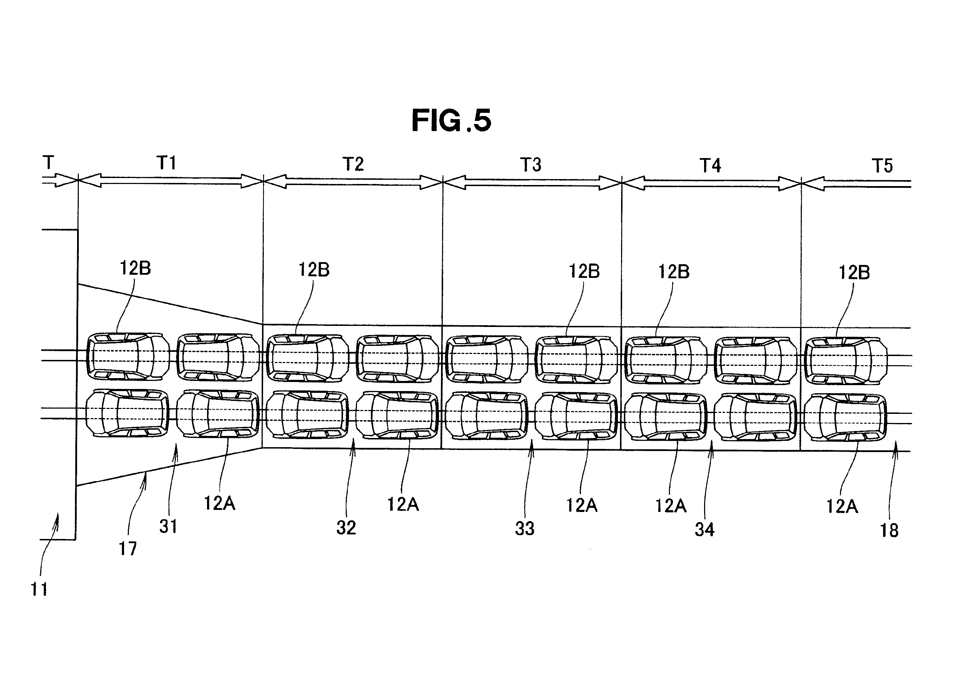

When the atmospheric air temperatures in the drying furnace 11 and in the first area 31, second area 32, third area 33, and fourth area 34 of the closed cross-section conduit 17 after the atmospheric air is circulated are denoted as T, T1, T2, T3, and T4, and the atmospheric air temperature of the external conduit 18 is denoted as T5 as shown in FIG. 5, the temperatures of the areas 31 to 34 and the external conduit 18 rise incrementally toward the drying furnace 11, which has the highest temperature. Specifically, the temperatures have the following relationship: T>T1>T2>T3>T4>T5.

Thus, the temperature differences between adjacent areas can be further reduced by dividing the closed cross-section conduit 17 into a plurality of areas 31 to 34. Thus, the areas 31 to 34 are divided, their capacities decrease, the atmospheric air temperatures become uniform more quickly, and the temperatures can be made more uniform. Therefore, the preparatory heating of the inbound vehicles 12A conveyed into the drying furnace 11 can be performed efficiently.

Even if the outside air intake fan 47 is provided at the top of the fourth area 34 and the outside air is taken into the fourth area 34 by this outside air intake fan 47 as shown in FIG. 1B, the atmospheric air temperature can be increased incrementally from the fourth area 34 to the first area 31 by the plurality of areas 31 to 34 in FIG. 5, outside air can therefore be prevented from directly reaching the first area 31, and the atmospheric air temperatures of the areas 31 to 34 can be raised more efficiently than in conventional practice.

In the first embodiment, as shown in FIGS. 1A and 5, the outbound track 16 and the inbound track 13, which are the respective conveying conduits of the outbound vehicles 12B as outbound objects conveyed out from the drying furnace 11 and the inbound vehicles 12A as inbound objected conveyed into the drying furnace 11, are provided in the same closed cross-section conduit 17, the closed cross-section conduit 17 is divided in the conveying direction into the first area 31, the second area 32, the third area 33, and the fourth area 34 as a plurality of areas, and heat exchange takes place between the outbound vehicles 12B and the inbound vehicles 12A in each of the divided areas 31 to 34 via the atmospheric air in the areas 31 to 34.

With the configuration described above, the capacities of the areas 31 to 34 can be reduced and the atmospheric air temperatures in the areas 31 to 34 can be quickly made uniform by dividing the closed cross-section conduit 17 into a plurality of areas 31 to 34. Furthermore, the temperatures of the atmospheric air in each of the divided plurality of areas 31 to 34 can be increased incrementally toward the drying furnace 11. Therefore, due to all these factors, the preparatory heating of the inbound vehicles 12A can be performed efficiently and sufficiently.

The heat exchange apparatus according to the present invention comprises, as shown in FIGS. 1A, 1B, 2, and 3, the closed cross-section conduit 17 having the outbound track 16 and the inbound track 13, which are designated respectively for the outbound vehicles 12B conveyed out from the drying furnace 11 and the inbound vehicles 12A conveyed into the drying furnace 11; the partitioning walls 42 to 44 as partitioning structures for dividing the closed cross-section conduit 17 in the conveying direction into the plurality of areas 31 to 34; and the in-chamber circulation fans 52 as atmospheric air circulating devices for circulating the atmospheric air in order to facilitate heat exchange between the outbound vehicles 12B and inbound vehicles 12A in each of the divided areas 31 to 34 via the atmospheric air of the of areas 31 to 34.

Therefore, the capacities of the areas 31 to 34 can be reduced by dividing the closed cross-section conduit 17 into the plurality of areas 31 to 34 by the partitioning walls 42 to 44, and in addition to this, the atmospheric air temperatures in the areas 31 to 34 can be quickly made uniform by the in-chamber circulation fans 52 as well. Furthermore, the temperatures of the atmospheric air in each of the divided areas 31 to 34 can be increased incrementally toward the drying furnace 11. Therefore, due to all these factors, the preparatory heating of the inbound vehicles 12A can be performed efficiently and sufficiently.

Instead of the partitioning walls shown in the embodiment, the partitioning structure of the present invention may be partitioning plates, curtains, or air curtains.

### (Second Embodiment)

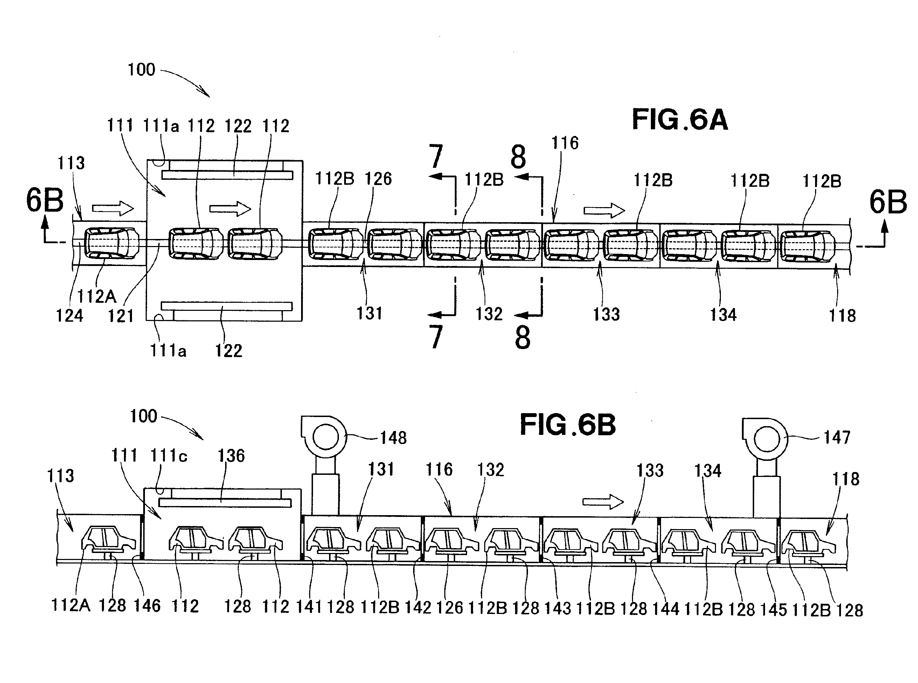

FIGS. 6 through 10 show a coating and drying apparatus 100 of a second embodiment.

The coating and drying apparatus 100 shown in FIG. 6A is configured from a drying furnace 111 whose atmospheric air is set to a predetermined temperature in order to dry the coatings applied to automobiles, an inbound track 113 for conveying vehicle bodies 112 of automobiles, i.e. inbound vehicles 112A (the inbound vehicles 112A are the same as the vehicle bodies 112 but their symbols are changed here for the sake of convenience) into the drying furnace 111, and an outbound track 116 for conveying vehicle bodies 112, i.e. outbound vehicles 112B (the outbound vehicles 112B are the same as the vehicle bodies 112 but their symbols are changed here for the sake of convenience) out from the drying furnace 111. The inbound track 113 and the outbound track 116 are both formed into closed cross-section conduits, and the inbound vehicles 112A and outbound vehicles 112B move at a predetermined rate as shown by the white arrows. The symbol 118 indicates an external conduit provided on the outside of the outbound track 116.

The drying furnace 111 is formed into a closed space comprising a drying furnace rail 121 for conveying the vehicle bodies 112, and heaters 122, 122 provided to side walls 111a, 111a in order to increase the atmospheric air to a predetermined temperature.

The inbound track 113 comprises an inbound rail 124 provided so as to be continuous with the drying furnace rail 121 in order to convey in the inbound vehicles 112A.

The outbound track 116 comprises an outbound rail 126 provided so as to be continuous with the drying furnace rail 121 in order to convey out the outbound vehicles 112B, and the outbound track 116 is divided in the conveying direction of the outbound vehicles 112B into a plurality of areas, i.e., a first area 131, a second area 132, a third area 133, and a fourth area 134 in the stated order from the drying furnace 111.

FIG. 6B is a cross-sectional view along line 6B-6B in FIG. 6A. The drying furnace 111 has a heater 136 for increasing the atmospheric air to a predetermined temperature provided to the ceiling 111c.

The vehicle bodies 112, the inbound vehicles 112A, and the outbound vehicles 112B ride on platforms 128 having T shapes as seen from the side and moveably mounted on the drying furnace rail 121, the inbound rail 124 (FIG. 6A), and the outbound rail 126. The platforms 128 are driven in the conveying direction by a drive apparatus (not shown).

The drying furnace 111, the first area 131, second area 132, third area 133, and fourth area 134 of the outbound track 116, and the external conduit 118 are partitioned into partitioning walls 141 to 145. The symbol 146 indicates a partitioning wall for partitioning the drying furnace 111 and the inbound track 113.

An outside air intake fan 147 for taking outside air into the fourth area 134 is provided at the top of the outbound track 116; specifically, at the top of the fourth area 134, and at the top of the first area 131 is provided a high-temperature air recovery fan 148 for recovering air that has reached a high temperature in the first area 131.

The outside air taken into the fourth area 134 by the outside air intake fan 147 is sent from the fourth area 134 to the first area 131 and is recovered by the high-temperature air recovery fan 148, whereby waste heat is recovered from the high-temperature air in the first area 131.

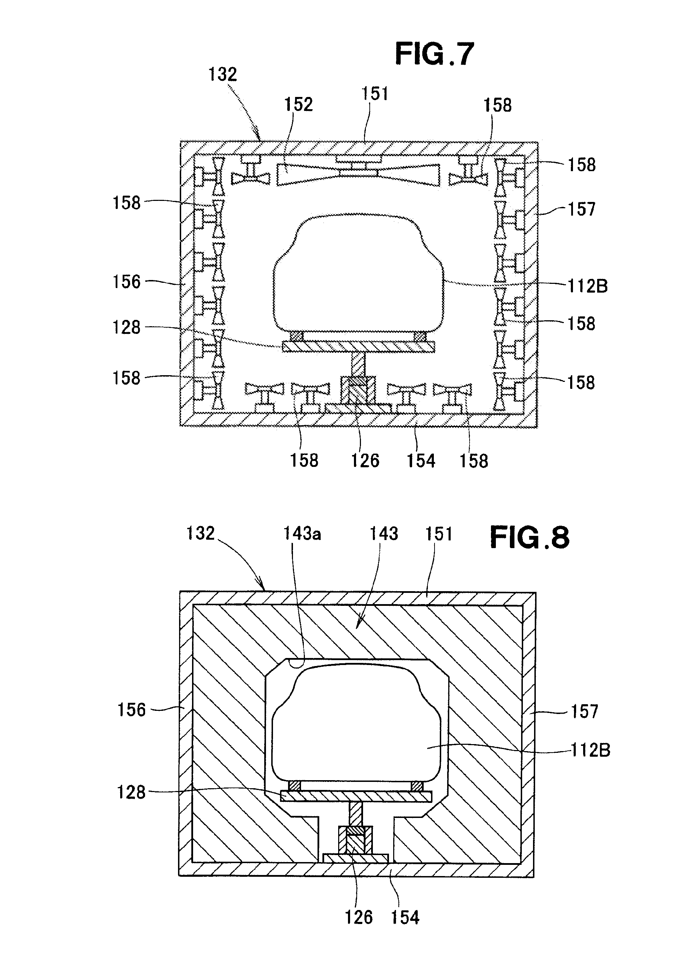

The second area 132 comprises a plurality of in-chamber circulation fans 152 provided on a ceiling 151 in order to circulate the inside air to make the atmospheric air temperature in the chamber uniform and maintain a constant temperature, and a plurality of air-blowing fans 158 provided on the ceiling 151, the floor 154, and the side walls 156, 157 in order to increase the flow rate of air along the surfaces of the outbound vehicles 112B by blowing air toward the outbound vehicles 112B, as shown in FIG. 7.

The first area 131, the third area 133, and the fourth area 134 shown in FIGS. 6A and 6B also comprise pluralities of in-chamber circulation fans 152 and pluralities of air-blowing fans 158, similar to the second area 132 shown in FIG. 7.

A partitioning wall 143 is attached to the ceiling 151, the floor 154, and the side walls 156, 157, and the partitioning wall 143 has a window part 143a formed so as to avoid interfering with the outbound vehicles 112B, the platforms 128, and the outbound rail 126, and also to further reduce the size of the gaps formed with these components, as shown in FIG. 8. This wall also suppresses heat exchange between the atmospheric air of the adjacent second area 132 and third area 133.

The other partitioning walls 141, 142, 144, and 145 shown in FIGS. 6A and 6B have the same structure as the partitioning wall 143 described above.

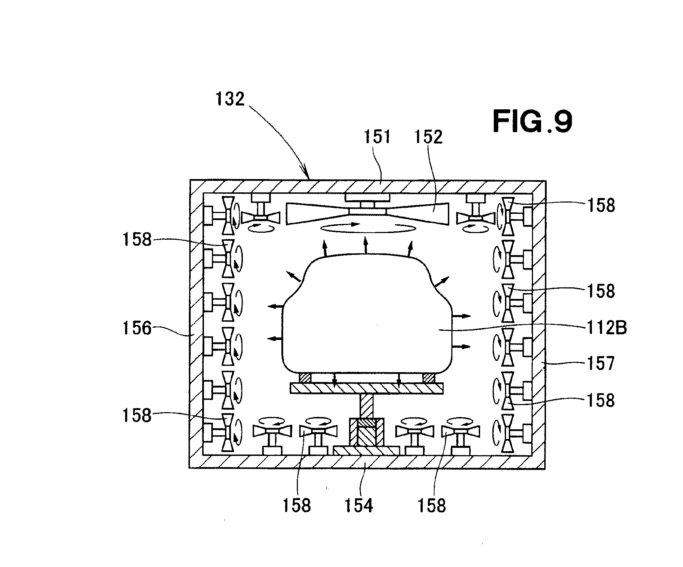

The heat from the outbound vehicles 112B conveyed out from the high-temperature drying furnace 111 (FIGS. 6A and 6B) as shown in FIG. 9 is radiated as shown by the arrows, and the heat is transferred into the second area 132.

When the in-chamber circulation fans 152 are operated, the air in the second area 132 circulates, the low-temperature air accumulated near the floor 154 mixes with the high-temperature air accumulated near the ceiling 151, and the temperature distribution of the air in the second area 132 becomes uniform.

When the air-blowing fans 158 are operated, air is blown toward the outbound vehicles 112B, the flow rate of the air flowing along the surfaces of the outbound vehicles 112B increases, the thermal conductivities of the outbound vehicles 112B improve, and the cooling rate of the outbound vehicles 112B can be increased.

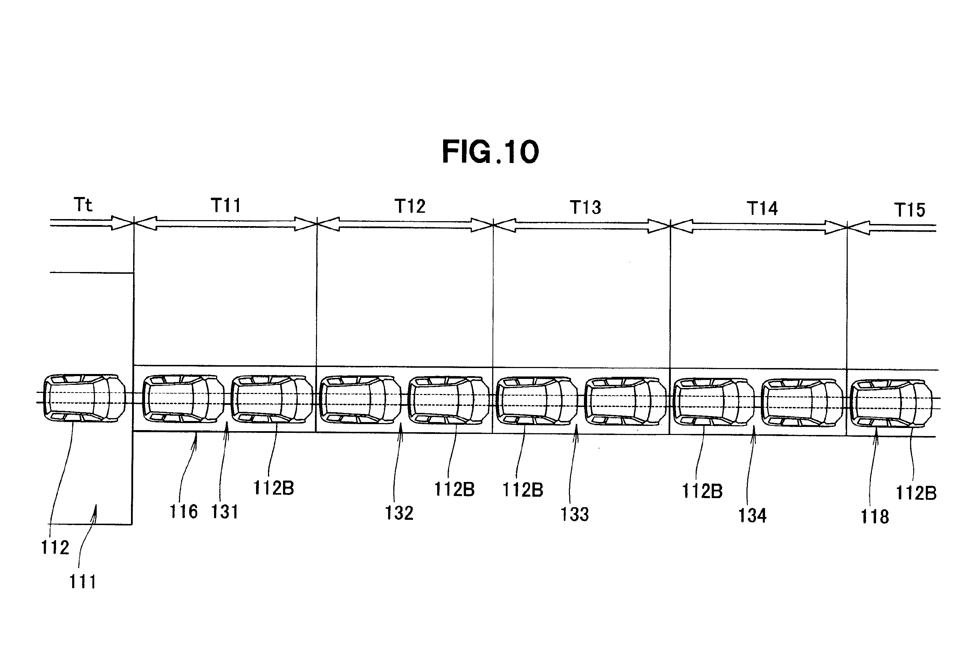

When the atmospheric air temperatures in the drying furnace 111 and in the first area 131, second area 132, third area 133, and fourth area 134 of the outbound track 116 after the atmospheric air is circulated are denoted as Tt, T11, T12, T13, and T14, and the atmospheric air temperature of the external conduit 118 is denoted as T15 as shown in FIG. 10, the extent by which the temperatures of the outbound vehicles 112B decrease becomes smaller toward the drying furnace 111, which has the highest temperature. Therefore, the atmospheric air temperature increases accordingly, and the temperatures of the areas 131 to 134 and the external conduit 118 rise incrementally. Specifically, the temperatures have the following relationship: Tt > T11 > T12 > T13 > T14 > T15.

Thus, the temperature difference between adjacent areas 131 to 134 can be further reduced by dividing the outbound track 116 into a plurality of areas 131 to 134. The areas 131 to 134 are divided, their capacities decrease, the atmospheric air temperatures become uniform more quickly, and the temperatures can be made more uniform.

Even if the outside air intake fan 147 is provided at the top of the fourth area 134 and the outside air is taken into the fourth area 134 by this outside air intake fan 147 as shown in FIG. 6B, the atmospheric air temperature can be increased incrementally from the fourth area 134 to the first area 131 by the plurality of areas 131 to 134 in FIG. 10, outside air can therefore be prevented from directly reaching the first area 131, and the atmospheric air temperatures of the areas 131 to 134 can be raised more efficiently than in conventional practice.

In the waste heat recovery method according to the second embodiment, the outbound track 116 that is a closed cross-section conduit for conveying outbound vehicles 112B as conveyed objects out from the drying furnace 111 is divided in the conveying direction into the first area 131, the second area 132, the third area 133, and the fourth area 134 as a plurality of areas as shown in FIG. 6B, heat exchange takes place in these areas 131 to 134 between the atmospheric air of the outbound vehicles 112B and the areas 131 to 134, the atmospheric air having undergone heat exchange in the predetermined areas 131 to 134 is sent to areas 131 to 134 closer to the drying furnace 111 than the predetermined areas 131 to 134, and waste heat is recovered in the first area 131 adjacent to the drying furnace 111.

The atmospheric air in each of the divided areas 131 to 134 undergoes heat exchange with the outbound vehicles 112B, and the atmospheric air is sent sequentially to the areas 131 to 134 closer to the drying furnace 111, whereby the atmospheric air is increased incrementally toward the drying furnace 111, and waste heat can be recovered efficiently from the atmospheric air highest in temperature in the first area 131 adjacent to the drying furnace 111.

The waste heat recovery apparatus according to the second embodiment comprises, as shown in FIGS. 6B, 7, and 8, the outbound track 116 for conveying outbound vehicles 112B out from the drying furnace 111, the partitioning walls 142 to 145 that are partitioning structures for dividing the outbound track 116 in the conveying direction into the plurality of areas 131 to 134, the in-chamber circulation fans 152 that are atmospheric air circulating devices for facilitating heat exchange between the outbound vehicles 112B and the areas 131 to 134 in each of the areas 131 to 134, the outside air intake fan 147 that is an air-blowing device for sending the atmospheric air having undergone heat exchange with the outbound vehicles 112B in the predetermined areas 131 to 134 to areas 131 to 134 closer to the drying furnace 111 than the predetermined areas 131 to 134, and the high-temperature air recovery fan 148 that is an intake device for drawing in the atmospheric air in the first area 131 adjacent to the drying furnace 111 in order to recover waste heat.

The atmospheric air in each of the divided areas 131 to 134 is circulated by the in-chamber circulation fans 152, facilitating heat exchange with the outbound vehicles 112B, and the atmospheric air is sent sequentially to the areas 131 to 134 closer to the drying furnace 111 by the outside air intake fan 147, whereby the atmospheric air temperature rises incrementally, and waste heat can be recovered efficiently by using the high-temperature air recovery fan 148 to draw in the highest-temperature atmospheric air in the first area 131 adjacent to the drying furnace 111.

Instead of the partitioning walls shown in the embodiments, the partitioning structure of the present invention may be partitioning plates, curtains, or air curtains.

The heat exchange method, the heat exchange apparatus, the waste heat recovery method, and the waste heat recovery apparatus according to the present invention are suitable for coating equipment for automobiles.

## Claims

1. A heat exchange method comprising the steps of:
providing first and second conveying tracks (13, 16) in a single closed cross-section conduit (17), the first conveying track being used for an inbound object (12A) conveyed into a drying furnace (11) and the second conveying track being used for an outbound object (12B) conveyed out from the drying furnace (11);
dividing the closed cross-section conduit (17) in a conveying direction into a plurality of areas (31, 32, 33, 34); and
conducting heat exchange between the outbound object (12B) and the inbound object (12A) in each of the divided areas via atmospheric air in the areas.

2. The method of claim 1, wherein the heat exchange is conducted by a movement of heat from the outbound object (12B) to the inbound object (12A) via the atmospheric air in the areas.

3. A heat exchange apparatus comprising:
a closed cross-section conduit (17) having first and second conveying tracks (13, 16), the first conveying track being used for an inbound object (12A) conveyed into a drying furnace (11) and the second conveying track being used for an outbound object (12B) conveyed out from the drying furnace (11);
partitioning structures (41, 42, 43, 44, 45) for dividing the closed cross-section conduit (17) in a conveying direction into a plurality of areas (31, 32, 33, 34); and
an atmospheric air circulation device (52) for circulating atmospheric air in order to facilitate heat exchange between the outbound object (12B) and the inbound object (12A) in each of the divided areas via the atmospheric air in the areas.

4. A waste heat recovery method comprising the steps of:
dividing a closed cross-section conduit for conveying an outbound object (12B) out from a drying furnace (111) in a conveying direction, into a plurality of areas (131, 132, 133, 134);
conducting heat exchange between the outbound object in the plurality of areas and the atmospheric air in the areas;
sending the atmospheric air having undergone heat exchange in a predetermined area to an area that is closer to the drying furnace than the predetermined area; and
recovering waste heat in the area (131) that is adjacent to the drying furnace.

5. A waste heat recovery apparatus comprising:
a closed cross-section conduit (117) for conveying an outbound vehicle (112B) out from a drying furnace (111);
partitioning structures (141, 142, 143, 144, 145) for dividing the closed cross-section conduit in a conveying direction into a plurality of areas (131, 132, 133, 134);
an atmospheric air circulation device (152) for facilitating heat exchange between the areas and the outbound object in each of the areas;
an air-blowing device (147) for delivering the atmospheric air having undergone heat exchange with the outbound object in the predetermined area to an area closer to the drying furnace (111) than the predetermined area; and
an intake device (148) for drawing in the atmospheric air in the area (131) that is adjacent to the drying furnace in order to recover waste heat.
